# EUROPEAN PATENT APPLICATION

(11) **EP 2 287 543 A2**
(43) Date of publication of application: **23.02.2011**
(21) Application number: 10166928.1
(22) Date of filing: 22.06.2010
(51) Int. Cl.: F24J 2/05, F24J 2/38, F24J 2/52, F24J 2/54

(54) **Solar light utilizing systems and solar light devices having the same**

(30) Priority: 20.08.2009 KR 20090077164
(71) Applicant: Samsung Electronics Co., Ltd., Suwon-si, Gyeonggi-do 442-742 (KR)
(72) Inventor: Son, Hyung-bin, Gyeonggi-do (KR)
(74) Representative: Greene, Simon Kenneth

(57) **Abstract**

Solar light utilizing systems and solar devices are provided, the solar light utilizing system includes a main body portion (110), a solar light collecting unit (130) associated with the main body portion (110) and a tracking unit (150) configured to change an orientation of the solar light collecting unit by moving a center of mass of the solar light utilizing system.

## Description

Example embodiments relate to solar light utilizing systems and solar light devices including solar light utilizing systems. Other example embodiments relate to solar light utilizing systems that track a position of solar light and collect the solar light.

Alternative energy technologies have been briefly studied. In alternative energy technologies for replacing general fossil fuel energy with new energy, solar heat, heat of the earth, and a difference between the ebb and flow of the tide are used as energy sources. In particular, in alternative energy technologies using solar energy, infinite and/or pollution-free solar energy is used. Thus, fuel costs may not be incurred and/or there may be no air pollution or waste.

In solar light generation, a solar light panel is disposed towards the sun, and a solar light tracking system is usually used so as to obtain the greatest output. Solar light generation is classified as concentrating solar light generation and non-concentrating solar light generation. The solar light tracking system is used in order to increase the generation efficiency and/or the capacity by utilizing the maximum amount of solar light in the case of non-concentrating solar light generation, and in order to concentrate solar light in an accurate position in the case of concentrating solar light generation.

The solar light tracking system has a structure in which a solar light panel is moved using mechanical devices (*e.g*., motors, gears and similar devices). Such mechanical devices occasionally require repairs, and may malfunction in certain environmental conditions (for example, in strong wind). When the area of the solar light panel is increased for large-capacity power generation, mechanical elements for constituting the solar light tracking system (*e.g*., bases, pillars, joints and motors) have to be manufactured to withstand the weight of a large-sized solar light panel and/or the environmental conditions. Costs for manufacturing the solar light tracking system gradually increase, and a large portion of the costs are incurred for the mechanical devices (rather than the actual solar cells).

Example embodiments relate to solar light utilizing systems and solar light devices including solar light utilizing systems.

Example embodiments relate to solar light utilizing systems that track a position of solar light and collect the solar light.

Additional aspects will be set forth in part in the description which follows and, in part, will be apparent from the description, or may be learned by practice of the example embodiments.

According to example embodiments, a solar light utilizing system includes a main body portion including a curved shell, a solar light collecting unit fixed to the main body portion, and a tracking unit that changes an orientation of the solar light collecting unit by moving a center of mass of the solar light utilizing system.

The tracking unit may include a mass body, a driver that changes a relative position of the mass body with respect to the solar light collecting unit, and a controller that controls the driver.

At least one balance weight may be used as the mass body. The driver may include a motor member, and a power transmission member that transmits power generated by the motor member to the at least one balance weight.

A fluid may be used as the mass body. The driver may include a plurality of fluid tanks connected to each other via a fluid pipe, and a pump that allows the fluid to move between the plurality of fluid tanks.

The solar light collecting unit may include at least one of a solar cell for opto-electrically converting solar light and a heat collecting plate that collects thermal energy of solar light.

The main body portion may include a spherical shell or a cylindrical shell.

According to example embodiments, a solar light utilizing system includes a solar light collecting unit, a tracking unit for that changes an orientation of the solar light collecting unit by moving a center of mass of the solar light utilizing system, and a main body portion that connects the solar light collecting unit and the tracking unit and providing buoyancy that is used so that the solar light utilizing system floats in a fluid environment.

The solar light collecting unit, the tracking unit, and the main body portion may be accommodated in an outer shell filled with a fluid. The outer shell may be a spherical shell or a cylindrical shell.

The tracking unit may include a mass body, a driver that changes a relative position of the mass body with respect to the solar light collecting unit and a controller that controls the driver.

At least one balance weight may be used as the mass body. The driver may include a motor member, and a power transmission member that transmits power generated by the motor member to the at least one balance weight.

A fluid may be used as the mass body. The driver may include a plurality of fluid tanks connected to each other via a fluid pipe, and a pump that allows the fluid to move between the plurality of fluid tanks.

The solar light collecting unit may include at least one of a solar cell that opto-electrically converts solar light and a heat collecting plate that collects thermal energy of solar light.

These and/or other aspects will become apparent and more readily appreciated from the following description of the embodiments, taken in conjunction with the accompanying drawings of which:
FIGS. 1A through 1C are conceptual views for explaining a schematic structure of a solar light utilizing system and the principle of tracking solar light according to example embodiments;
FIGS. 2A through 2C are views illustrating a schematic structure of a solar light utilizing system and an operation of tracking solar light according to example embodiments;
FIGS. 3A through 3D are views of a solar light collecting unit that may be used in the solar light utilizing system of FIGS. 1A through 1C or the solar light utilizing system of FIGS. 2A through 2C according to example embodiments;
FIGS. 4A through 4C are views illustrating a schematic structure of a solar light utilizing system and an operation of tracking solar light according to example embodiments;
FIGS. 5A through 5C are views illustrating a schematic structure of a solar light utilizing system and an operation of tracking solar light according to example embodiments;
FIGS. 6A through 6C are views illustrating a schematic structure of a solar light utilizing system and an operation of tracking solar light according to example embodiments;
FIG. 7 is a view of a schematic structure of a solar light utilizing system according to example embodiments;
FIG. 8 is a view of a schematic structure of a solar light utilizing system according to example embodiments;
FIGS. 9A through 9C are views of a schematic structure of a solar light utilizing system according to example embodiments; and
FIG. 10 is a view of a schematic structure of a solar light device according to example embodiments.

Various example embodiments will now be described more fully with reference to the accompanying drawings in which some example embodiments are shown. However, specific structural and functional details disclosed herein are merely representative for purposes of describing example embodiments. Thus, the invention may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the invention.

In the drawings, the thicknesses of layers and regions may be exaggerated for clarity, and like numbers refer to like elements throughout the description of the figures.

Although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that, if an element is referred to as being "connected" or "coupled" to another element, it can be directly connected, or coupled, to the other element or intervening elements may be present. In contrast, if an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," if used herein, specify the presence of stated features, integers, steps, operations, elements and/or components, but do not preclude the presence or addition of one or more other features, integers, steps, operations, elements, components and/or groups thereof.

Spatially relative terms (*e.g*., "beneath," "below," "lower," "above," "upper" and the like) may be used herein for ease of description to describe one element or a relationship between a feature and another element or feature as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, for example, the term "below" can encompass both an orientation that is above, as well as, below. The device may be otherwise oriented (rotated 90 degrees or viewed or referenced at other orientations) and the spatially relative descriptors used herein should be interpreted accordingly.

Example embodiments are described herein with reference to cross-sectional illustrations that are schematic illustrations of idealized embodiments (and intermediate structures). As such, variations from the shapes of the illustrations as a result, for example, of manufacturing techniques and/or tolerances, may be expected. Thus, example embodiments should not be construed as limited to the particular shapes of regions illustrated herein but may include deviations in shapes that result, for example, from manufacturing. Thus, the regions illustrated in the figures are schematic in nature and their shapes do not necessarily illustrate the actual shape of a region of a device and do not limit the scope.

In order to more specifically describe example embodiments, various aspects will be described in detail with reference to the attached drawings. However, the present invention is not limited to example embodiments described.

Example embodiments relate to solar light utilizing systems and solar light devices including solar light utilizing systems. Other example embodiments relate to solar light utilizing systems that track a position of solar light and collect the solar light.

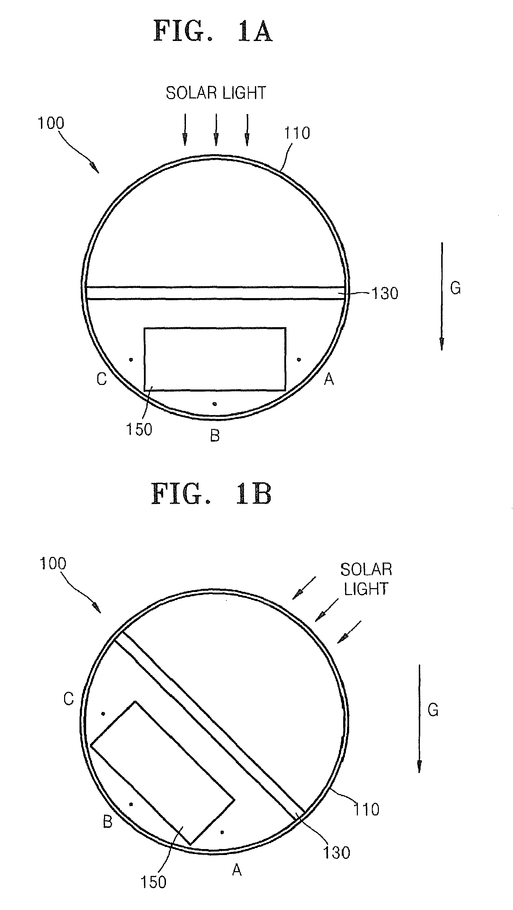

FIGS. 1A through 1C are conceptual views for explaining a schematic structure of a solar light utilizing system and the principle of tracking solar light according to example embodiments.

Referring to FIGS. 1A through 1C, a solar light utilizing system 100 according to example embodiments includes a main body portion 110 including a curved shell, a solar light collecting unit 130 fixed to the body portion 110, and a tracking unit 150 that moves a center of mass of the solar light utilizing system 100 to change the orientation (or position) of the solar light collecting unit 130.

The main body portion 110 includes at least a portion of a curved shell. For example, the main body portion 110 may include at least a portion of a spherical shell or a cylindrical shell.

The solar light collecting unit 130 may be a solar cell that opto-electrically converts solar light, a heat collecting plate that collects thermal energy of the solar light or a combination thereof.

The tracking unit 150 is disposed to move the center of mass of the solar light utilizing system 100. The tracking unit 150 includes a mass body and allows the center of mass of the solar light utilizing system 100 to be changed in a position within the curved shell of the main body portion 110. The center of mass of the solar light utilizing system 100 may be point A, point B or point C. When the center of mass of the solar light utilizing system 100 is point B, the solar light utilizing system 100 is disposed so that a normal to a curved surface of the main body portion 110 that passes point B may be in a gravity direction G, as illustrated in FIG. 1A. In the orientation of the solar light utilizing system 100, as illustrated in FIG. 1A, the solar light collecting unit 130 is directed towards the solar light.

When the direction of the solar light is changed, as illustrated in FIG. 1 B, the center of mass of the solar light utilizing system 100 may be changed to point A according to the operation of the tracking unit 150. In this case, the solar light utilizing system 100 is rotated so that a normal to a curved surface of the main body portion 110 that passes point A may be in the gravity direction G shown in FIG. 1 B. In this position in which the solar light utilizing system 100 is rotated, the solar light collecting unit 130 is directed towards the solar light.

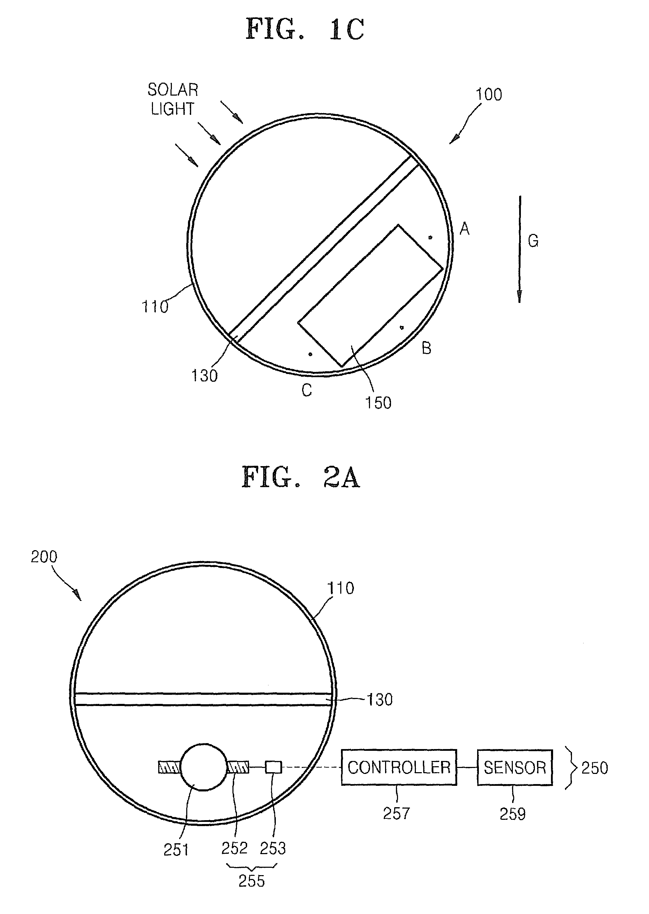

Similarly, when the direction of the solar light is a direction as illustrated in FIG. 1C, the tracking unit 150 allows the center of mass of the solar light utilizing system 100 to be moved to point C. The solar light utilizing system 100 is rotated so that a normal to a curved surface of the main body portion 110 that passes point C may be in the gravity direction G shown in FIG. 1C. In this position in which the solar light utilizing system 100 is rotated, the solar light collecting unit 130 is directed towards the solar light.

The solar light utilizing system 100 having the above structure may be installed both on the ground and on the surface of water. The gravity direction G is a buoyancy direction when the solar light utilizing system 100 is installed on the surface of water. Hereinafter, a solar light utilizing system including a detailed structure of a tracking unit according to example embodiments will be described.

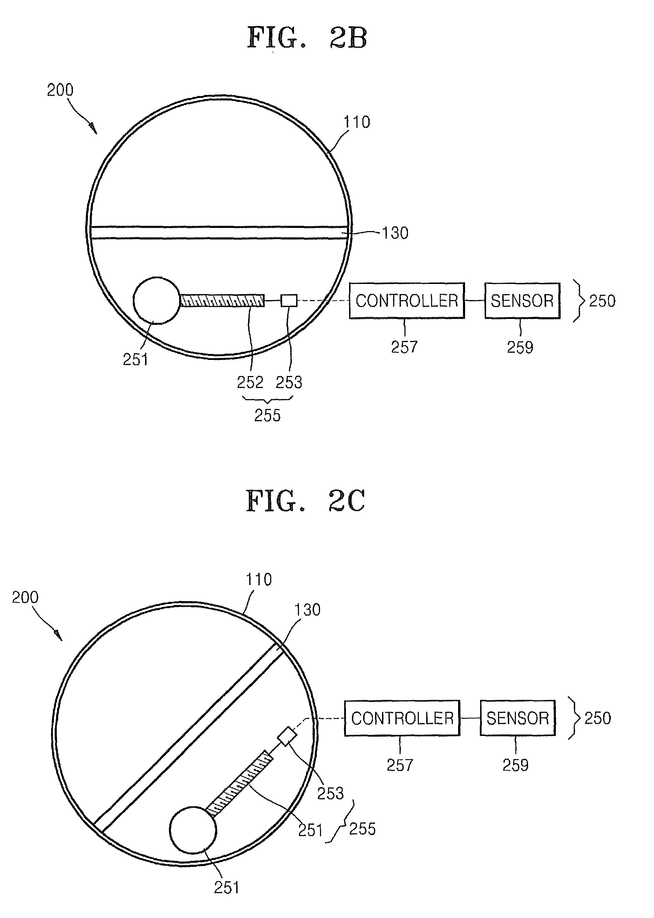

FIGS. 2A through 2C are views illustrating a schematic structure of a solar light utilizing system and an operation of tracking solar light according to example embodiments.

Referring to FIGS. 2A through 2C, a solar light utilizing system 200 includes the main body portion 110, the solar light collecting unit 130 and a tracking unit 250.

At least a portion of the main body portion 110 is curved-shell shaped. For example, the main body portion 110 may include at least a portion of a spherical shell or a cylindrical shell. A cross-sectional shape of the main body portion 110 is not limited to a circular shape and thus may be realized in various shapes. The main body portion 110 may be formed of a transparent material (*e.g*., glass material, acryl or transparent plastic material such as polyvinyl chloride (PVC)).

The solar light collecting unit 130 may include a solar cell that generates electricity using solar light. The solar cell of the solar light collecting unit 130 may be formed of crystalline and/or amorphous silicon semiconductors, or various compound semiconductors. The solar cell of the solar light collecting unit 130 may have a thin- film structure or a tandem structure. The solar light collecting unit 130 may include a heat collecting plate that collects thermal energy of the solar light. The solar light collecting unit 130 may have a structure in which solar energy is simultaneously used as electrical energy and thermal energy.

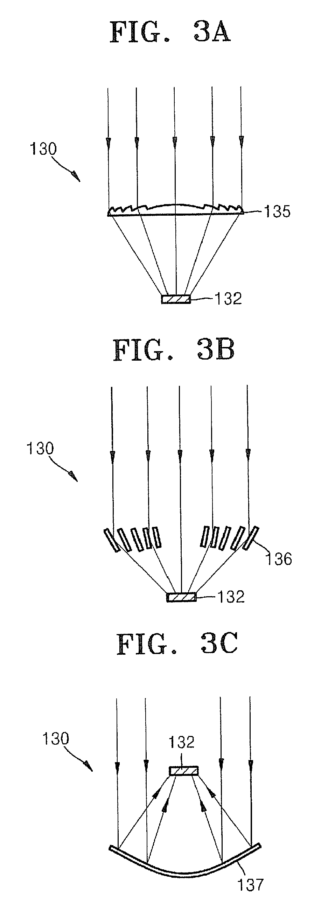

FIGS. 3A through 3D are views of the solar light collecting unit that may be used in the solar light utilizing system shown in FIGS. 1A through 1C or the solar light utilizing system shown in FIGS. 2A through 2C according to example embodiments.

Referring to FIGS. 3A through 3D, the solar light collecting unit 130 may include an optical system for collecting the solar light. The optical system may include a structure in which light is focused by a lens 135 on a solar cell 132, as illustrated in FIG. 3A. The number or shape of lenses is not limited to that shown in FIG. 3A.

The solar light collecting unit 130 may use a plurality of mirrors 136, as illustrated in FIG. 3B. A path of solar light that is incident on the plurality of mirrors 136 disposed at different angles is changed due to different refraction angles so that light may be focused on the solar cell 132.

As illustrated in FIG. 3C, a concave mirror 137 may be disposed in rear of the solar cell 132 on an optical path. The solar light is refracted at different angles in each position of a concave surface of the concave mirror 137 and is focused on the solar cell 132.

In the structures of the solar light collecting unit 130 of FIGS. 3A through 3C, a frame (not shown), on which a lens member or a mirror member and the solar cell 132 are to be mounted, may be used. The frame may be disposed on the main body portion 110.

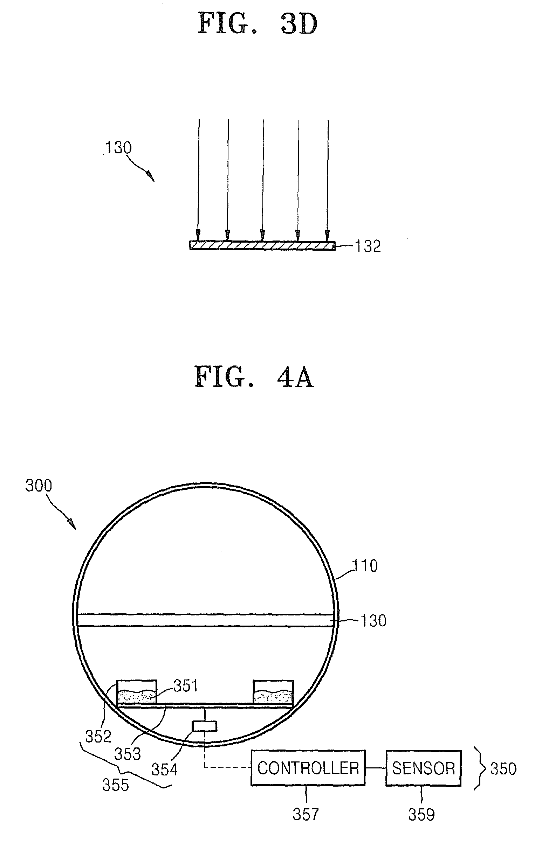

Without using a concentrating optical system, a structure as shown in FIG. 3D, in which light is directly incident on the solar cell 132, may be used as the solar light collection unit 130.

In FIGS. 2A through 2C, the tracking unit 250 changes the orientation of the solar light collecting unit 130 by moving a center of mass of the solar light utilizing system 200. The tracking unit 250 includes a mass body 251, a driver 255 that changes a relative position of the mass body 251 with respect to the solar light collecting unit 130, and a controller 257 that controls the driver 255.

In FIGS. 2A through 2C, at least one balance weight 251 may be used as the mass body. The balance weight 251 may be properly set in consideration of the weight of the solar light utilizing system 200 so that the center of mass of the solar light utilizing system 200 may be moved according to the movement of the balance weight 251. The driver 255 includes a motor member 253 and a power transmission member 252 that transmits power generated by the motor member 253 to the balance weight 251. Various motors (*e.g*., a stepper motor, a DC motor, an AC motor, a piezomotor or voice coils), may be used as the motor member 253. The power transmission member 252 is disposed (or configured) to convert power generated by the motor member 253 into a substantially large force that may be used to move the balance weight 251. For example, a screw or gear may be used as the power transmission member 252. The power transmission member 252 may include a motion guide (not shown) that helps the balance weight 251 to be moved only in a desired or set direction.

The controller 257 controls the driver 255 in order to control a direction in which the balance weight 251 is moved and/or the amount of movement of the balance weight 251. The controller 257 determines the position of solar light according to time, and thereby controls the driver 255.

The tracking unit 250 may include a sensor 259 that senses the position of the solar light. The controller 257 controls the driver 255 according to information about the position of the solar light sensed by the sensor 259. An optical sensor using a CdS sensor, a photodiode or a light emitting diode (LED) may be used as the sensor 259.

The controller 257 or the sensor 259 and the driver 255 may be packaged in the main body portion 110. The controller 257 may be disposed outside the main body portion 110 so as to remotely control the driver 255.

The solar light utilizing system 200 may include a transmission unit (not shown) that transmits power generated by the solar light collecting unit 130 to a desired (or set) place. The transmission unit may be configured to transmit power in a wired manner, or in a wireless manner, by using magnetic induction generated by coils.

An operation of changing the direction of the solar light collecting unit 130 according to the operation of the tracking unit 250 will now be described.

When the balance weight 251 is moved due to the control of the driver 255 from the position shown in FIG. 2A to the left (as illustrated in FIG. 2B), the solar light utilizing system 200 is rotated counterclockwise and the orientation of the solar light collecting unit 130 is changed.

Although one-axis tracking has been described with reference to one balance weight 251 as above, two-axis tracking may be performed when a plurality of balance weights are provided and the movement of each of the plurality of balance weights is controlled in two directions which are orthogonal to each other. In other example embodiment, multi-axis (or three or more) tracking may be performed.

The solar light utilizing system 200 may directly increase the size of the solar light collecting unit 130 and the size of the main body portion 110 in order to increase the capacity of power generation of the solar light collecting unit 130.

A structure (or solar device), in which a plurality of solar light utilizing systems 200 each having a set (or desired) size and arrayed in parallel, may be employed. If necessary, a plurality of solar light utilizing systems 200 may be one-dimensionally or two-dimensionally arrayed.

The solar light utilizing system 200 may be installed at various places. For example, the solar light utilizing system 200 may be installed on the ground or on the surface of water. The solar light utilizing system 200 may be installed on the surface of the earth or on the top of a building. The solar light utilizing system 200 may be suspended by a post (*e.g*., a telegraph or telephone pole). The solar light utilizing system 200 may be installed in the air using an air balloon.

Hereinafter, a solar light utilizing system according to example embodiments will be described in detail. The following embodiments will be described based on modifications of the solar light utilizing system shown in FIGS. 2A through 2C.

FIGS. 4A through 4C are views illustrating a schematic structure of a solar light utilizing system according to example embodiments and an operation of tracking solar light.

Referring to FIGS. 4A through 4C, a solar light utilizing system 300 according to example embodiments includes the main body portion 110, the solar light collecting unit 130 and a tracking unit 350.

The tracking unit 350 changes the orientation of the solar light collecting unit 130 by moving a center of mass of the solar light utilizing system 300. The tracking unit 350 includes a mass body 351, a driver 355 that changes a relative position of the mass body 351 with respect to the solar light collecting unit 130, and a controller 357 that controls the driver 355. The controller 357 determines the position of solar light according to time, and thereby controls the driver 355. The tracking unit 350 may include a sensor 359 that senses the position of the solar light. The controller 357 may control the driver 355 according to information about the position of the solar light sensed by the sensor 359.

In FIGS. 4A through 4C, a fluid is used as the mass body 351. The amount or type of the fluid 351 may be properly set in consideration of the weight of the solar light utilizing system 300 so that the center of mass of the solar light utilizing system 300 may be moved according to the movement of the fluid 351.

The driver 355 includes two fluid tanks 352 connected to each other via a fluid pipe 353, and a pump 354 that allows the fluid 351 to move between the two fluid tanks 352. A general mechanical pump, a micro-electromechanical system (MEMS) pump, a piezoelectric pump, or a magneto-hydrodynamic (MHD) pump may be used as the pump 354.

An operation of changing the direction of the solar light collecting unit 130 according to the operation of the tracking unit 350 will now be described.

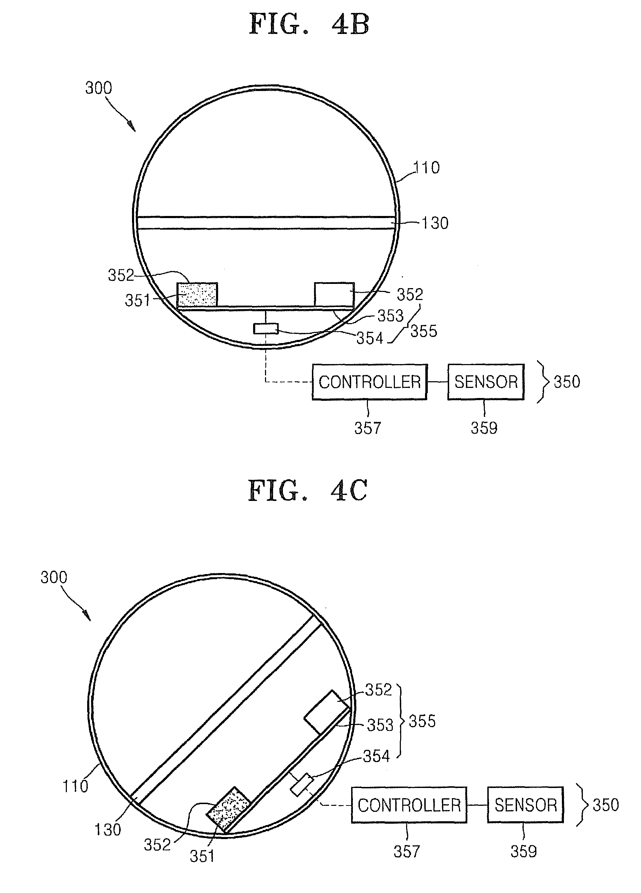

When the fluid 351 moves into the fluid tank 352 disposed on the left side (from the position shown in FIG. 4A) due to the control of the driver 355 (as illustrated in FIG. 4B), the solar light utilizing system 300 is rotated counterclockwise and the orientation of the solar light collecting unit 130 is changed (as illustrated in FIG. 4C).

Although one-axis tracking has been described above with reference to two fluid tanks 352, two-axis or multi-axis tracking may be performed when three or more fluid tanks 352 are provided and the movement of the fluid 351 is controlled.

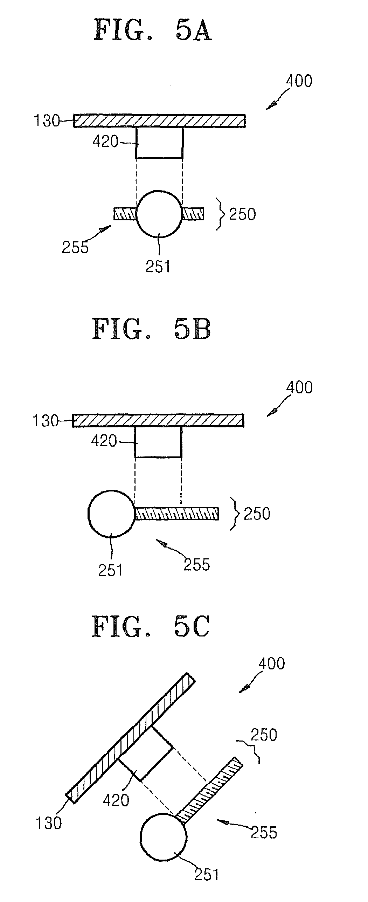

FIGS. 5A through 5C are views illustrating a schematic structure of a solar light utilizing system and an operation of tracking solar light according to example embodiments.

Referring to FIGS. 5A through 5C, a solar light utilizing system 400 according to example embodiments includes the solar light collecting unit 130, a main body portion 420 and a tracking unit 250. In example embodiments, the solar light utilizing system 400 is not fixed to the main body portion 110 shown in FIGS. 2A through 2C including a curved shell shape, but floats in a fluid environment. To this end, the main body portion 420 connects the solar light collecting unit 130 and the tracking unit 250 and provides buoyancy that is used so that the solar light utilizing system 400 may float in a fluid environment.

The tracking unit 250 changes the orientation of the solar light collecting unit 130 by moving a center of mass of the solar light utilizing system 400. The tracking unit 250 is substantially the same as the tracking unit 250 described above with reference to FIGS. 2A through 2C which uses a balance weight 251 as a mass body.

An operation of changing the direction of the solar light collecting unit 130 according to the operation of the tracking unit 250 will be described as follows.

The solar light utilizing system 400 with the arrangement as illustrated in FIG. 5A floats in a fluid environment. When the balance weight 251 is moved to the left due to the control of a driver 255 (as illustrated in FIG. 5B), the solar light utilizing system 400 is rotated counterclockwise and the orientation of the solar light collecting unit 130 is changed (as shown in FIG. 5C).

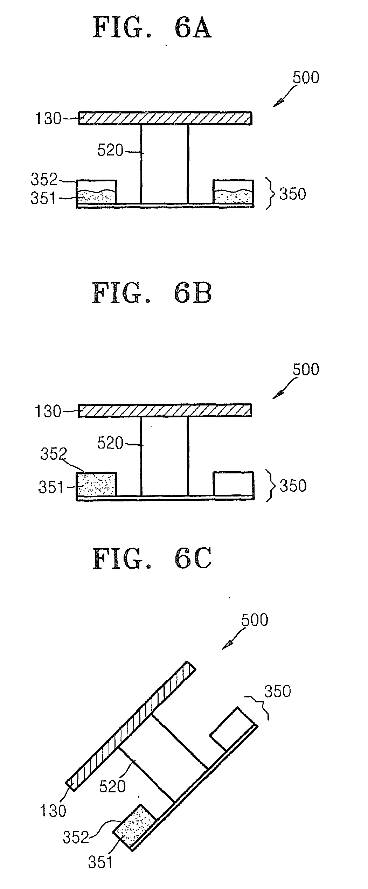

FIGS. 6A through 6C are views illustrating a schematic structure of a solar light utilizing system and an operation of tracking solar light according to example embodiments.

Referring to FIGS. 6A through 6C, a solar light utilizing system 500 according to example embodiments includes the solar light collecting unit 130, a main body portion 520 and a tracking unit 350. In example embodiments, like in FIGS. 5A through 5C, the solar light utilizing system 500 itself floats in a fluid environment. The main body portion 520 connects the solar light collecting unit 130 and the tracking unit 350 and provides buoyancy that is used so that the solar light utilizing system 500 may float in a fluid environment.

The tracking unit 350 changes the orientation of the solar light collecting unit 130 by moving a center of mass of the solar light utilizing system 500. The tracking unit 350 is substantially the same the tracking unit 350 described above with reference to FIGS. 4A through 4C which uses a fluid 351 as a mass body.

An operation of changing the direction of the solar light collecting unit 130 according to the operation of the tracking unit 350 will be described as follows.

The solar light utilizing system 500 with the arrangement as illustrated in FIG. 6A floats in a fluid environment. When the fluid 351 is moved to a fluid tank 352 disposed on the left side due to the control of a driver (as illustrated in FIG. 6B), the solar light utilizing system 500 is rotated counterclockwise and the direction of the solar light collecting unit 130 is changed as shown in FIG. 6C.

The solar light utilizing systems 400 and 500 illustrated in FIGS. 5A through 5C and FIGS. 6A through 6C, respectively, are installed in a fluid environment (*e.g*., in the river or in the sea). In this case, rotational vibration of the solar light utilizing system 400 or 500 occurs due to surface waves (*e.g*., ripples). As such, it may be difficult to accurately track the position of the solar light. However, a rotational resonance period of the solar light utilizing system 400 or 500 is longer than the period of the surface waves so that rotational vibration of the solar light utilizing system 400 or 500 due to surface waves may be alleviated.

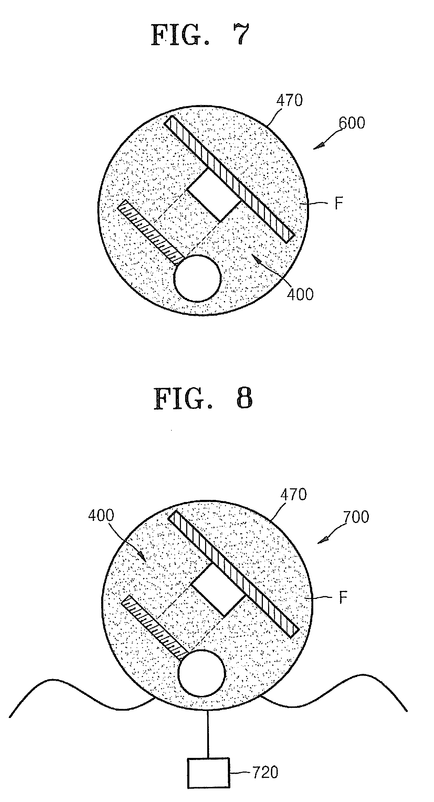

FIG. 7 is a view of a schematic structure of a solar light utilizing system according to example embodiments.

Referring to FIG.7, a solar light utilizing system 600 according to example embodiments has a structure in which the solar light utilizing system 400 illustrated in FIGS. 5A through 5C is accommodated in an outer shell 470 filled with a fluid F. The outer shell 470 may be a spherical shell or a cylinder shell. The outer shell 470 may be formed of a transparent material (*e.g*., glass material, acryl, or transparent plastic material such as PVC).

The solar light utilizing system 600 having the above structure may be installed on the ground or on the surface of water. As such, effects caused by an external environment may be reduced (or prevented). For example, a rotational vibration force generated by an external environment (*e.g*., wind or waves) is alleviated due to the fluid F and is transmitted to the solar light utilizing system 600, thereby reducing (or preventing) a rotational vibration due to the external environment. The fluid F may be used to cool the solar light collecting unit 130 (*e.g*., a solar cell) so that the performance of the solar cell may be stabilized and a life-span characteristic thereof may be increased.

In example embodiments, the solar light utilizing system 400 illustrated in FIGS. 5A through 5C is accommodated in the outer shell 470 filled with the fluid F. However, example embodiments are not limited thereto. Thus, for example, the solar light utilizing system 500 illustrated in FIGS. 6A through 6C may be accommodated therein.

FIG. 8 is a view of a schematic structure of a solar light utilizing system according to example embodiments.

Referring to FIG. 8, the example embodiments are a modified example of the solar light utilizing system 600 of FIG. 7. For example, a solar light utilizing system 700 may reduce the effect caused by waves when the solar light utilizing system 700 is installed on the surface of water. As described above, in order to reduce rotational vibration caused by surface waves, the rotational resonance period of the solar light utilizing system 700 may be substantially longer than the period of the surface waves, and the outer shell 470 filled with the fluid F may be used. A mass body 720, which is a damping member, may be suspended on the outer shell 470.

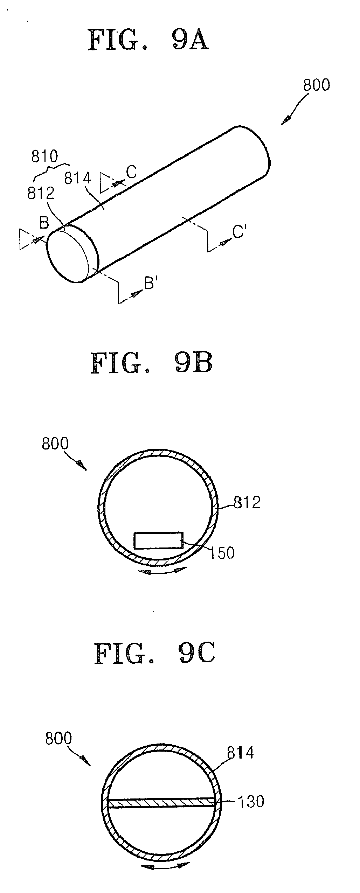

FIGS. 9A through 9C are views of a schematic structure of a solar light utilizing system according to example embodiments. FIG. 9A is a perspective view of the solar light utilizing system, and FIGS. 9B and 9C are cross-sectional views of the solar light utilizing system of FIG. 9A taken along line B-B' and C-C', respectively.

Referring to FIGS. 9A through 9C, a solar light utilizing system 800 according to example embodiments includes a main body portion 810, a solar light collecting unit 130 and a tracking unit 150. The main body portion 810 has a cylindrical shell shape. The solar light collecting unit 130 and the tracking unit 150 are disposed so that their positions on the axis of the main body portion 810 having the cylindrical shell shape may be different from each other. In other words, the main body portion 810 is divided into a first region 812 in which the tracking unit 150 is disposed and a second region 814 in which the solar light collecting unit 130 is disposed. The tracking unit 150 allows a center of mass of the solar light utilizing system 800 to be moved. For example, the tracking unit 150 has substantially the same structure as that of the tracking unit 250 shown in FIGS. 2A through 2C or the tracking unit 350 shown in FIGS. 4A through 4C. The first region 812 of the main body portion 810 is moved along an arrow direction as the tracking unit 150 is driven. The second region 814 of the main body portion 810 is interlocked with the movement of the first region 812. As such, the orientation of the solar light collecting unit 130 is changed.

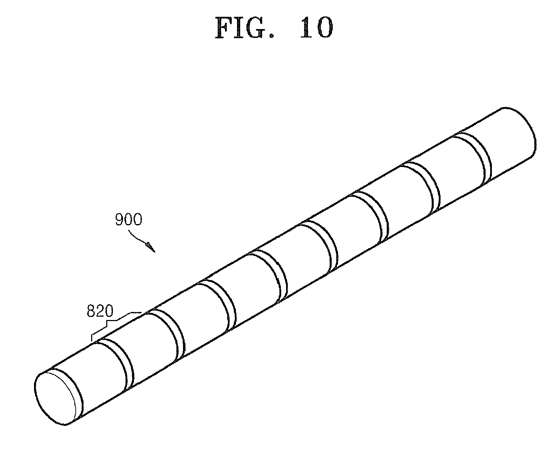

FIG. 10 is a view of a schematic structure of a solar light device according to example embodiments.

Referring to FIG. 10, the solar light device 900 according to example embodiments has a structure in which a plurality of the solar light utilizing systems 800 of FIGS. 9A through 9C are arrayed along the axial directions of the main body portion 810 including the cylinder shell. The above structure increases the capacity of power generation and is fairly easy to install. For example, both ends of the solar light device 900 may be attached to a telegraph pole or an iron tower. The solar light device 900 may be easily installed in places in which a general solar light generation facility is not easily installed (*e.g*., in mountainous areas).

As described above, the solar light utilizing systems according to example embodiments use a tracking system having a low center of mass and having no mechanical stress caused by external environment conditions and thus may have a more mechanically stable structure.

The tracking system and an external structure of the systems are not mechanically connected to each other, and fundamental construction is not performed. The solar light utilizing system may be installed on the surface of water, in the air or on the ground. There are no limitations to the places in which the solar light utilizing systems may be installed.

It should be understood that the example embodiments described therein should be considered in a descriptive sense only and not for purposes of limitation. Descriptions of features or aspects within each example embodiment should typically be considered as available for other similar features or aspects in other example embodiments.

## Claims

1. A solar light utilizing system, comprising:
a main body portion (110);
a solar light collecting unit (130) associated with the main body portion; and
a tracking unit (150) configured to change an orientation of the solar light collecting unit by moving a center of mass of the solar light utilizing system.

2. The system of claim 1, wherein the solar light collecting unit (130) is fixed to the main body portion (110, and the main body portion has a curved shell.

3. The system of claim 2, wherein the tracking unit (150) includes a mass body (251), a driver (255) configured to change a relative position of the mass body with respect to the solar light collecting unit (130), and a controller (257) configured to control the driver.

4. The system of claim 3, wherein the mass body (251) is at least one balance weight, and wherein the driver (255) includes a motor member, and a power transmission member (252) configured to transmit power generated by the motor member to the at least one balance weight.

5. The system of claim 3, wherein the mass body (251) is a fluid, and wherein the driver (255) includes a plurality of fluid tanks (352) connected to each other via a fluid pipe (353) , and a pump (354) adapted to allow the fluid to move between the plurality of fluid tanks.

6. The system of claim 3, 4 or 5, wherein the tracking unit (150) includes a sensor (259) adapted to sense a position of solar light.

7. The system of any of claims 2 to 6, wherein the solar light collecting unit (130) includes at least one selected from the group consisting of: a solar cell configured to opto-electrically convert solar light; a heat collecting plate configured to collect thermal energy of solar light; and an optical system configured to collect the solar light.

8. The system of any of claims 2 to 7, wherein the main body portion (110) includes a spherical shell

9. The system of any of claims 2 to 7, wherein the main body portion (110) includes a cylindrical shell.

10. The system of claim 9, wherein the solar light collecting unit (130) and the tracking unit (150) are disposed so that axial positions of the cylindrical shell of the main body portion are different from each other.

11. A solar light device, comprising a plurality of the solar light utilizing systems according to claim 9 arrayed along axial directions of the cylindrical shell of the main body portion (110).

12. A solar light device, comprising a plurality of the solar light utilizing systems according to any of claims 2 to 10 arrayed one-dimensionally or two-dimensionally.

13. The system of any preceding claim, wherein the main body portion (110) is configured to connect the solar light collecting unit (130) and the tracking unit (150) and to provide buoyancy so that the solar light utilizing system floats in a fluid environment.

14. The system of claim 13, wherein the solar light collecting unit (130), the tracking unit (150), and the main body portion (110) are accommodated in an outer shell filled with a fluid.

15. The system of claim 13 or 14, wherein the tracking unit (150) includes a mass body, a driver configured to change a relative position of the mass body with respect to the solar light collecting unit (130), and a controller configured to control the driver.
